# FASCICULE DE BREVET EUROPEEN

(11) **EP 0 438 098 B1**
(45) Date de publication et mention de la délivrance du brevet: **29.03.1995**
(21) Numéro de dépôt: 91100370.5
(22) Date de dépôt: 14.01.1991
(51) Int. Cl.: H04Q 7/38

(54) **Procédé de protection contre la saturation de la base de données d'un enregistreur de localisation des visiteurs pour un système de radiotéléphonie cellulaire**
Schutzverfahren gegen Überlastung der Besucherdatei eines zellularen Funktelefonsystems
Method of protection against saturation of the visitor location register in a cellular radio telephone system

(30) Priorité: 19.01.1990 FR 9000616
(43) Date de publication de la demande: 24.07.1991
(73) Titulaire: ALCATEL CIT, 75008 Paris (FR)
(72) Inventeur: Delory, Jean-Michel, F-78320 Levis St Nom (FR); Treillard, Pascal, F-75015 Paris (FR)
(74) Mandataire: Weinmiller, Jürgen

(56) Documents cités:
- EP-A- 0 260 763
- WO-A-88/08238
- DE-A- 3 212 023
- MARTIN J.: "Computer Data-Base Organization" 1977, Prentice Hall, Englewood Cliffs, US, pages 620-624
- IEEE TRANSACTIONS ON SOFTWARE ENGINEERING, vol. SE-13, no. 1, janvier 1987, New York,US; pages 39 - 47; S.K. SARIN: "Discarding Obsolete Information In a Replicated Database System"
- COMMUTATION & TRANSMISSION,no. 4, 1988,Paris, FR; pages 17 - 30; M:BALLARD et al: "ECR 900 la radiotéléphonie numérique européenne d'Alcatel"
- 8TH EUROPEAN CONFERENCE ON ELECTRONICS EUROCON,juin 1988, Stockholm, SE; pages 462 - 464; J.A AUDESTAD: "Network aspects of the GSM system"

## Description

L'invention concerne un procédé de protection contre la saturation de la base de données d'un enregistreur de localisation de visiteurs, pour un système de radiotéléphonie cellulaire.

Le Groupe Spécial Mobile de la Conférence Européenne des Administrations des Postes et Télécommunications a élaboré des normes pour la mise en oeuvre d'un système européen de radiotéléphonie numérique cellulaire. Ce système comprend un sous-système radio constitué par : des stations mobiles, permettant à des abonnés mobiles d'accéder aux services de télécommunications; des stations de base; et des contrôleurs de stations de base. Le système comporte un autre sous-système constitué: de centres de commutation du service mobile; d'enregistreurs de localisation nominaux; d'enregistreurs de localisation des visiteurs; et de centres d'exploitation et de maintenance.

Une station de base assure la transmission radio-électrique et la gestion des couches basses des canaux de signalisation. Un contrôleur de stations de base assure la commande d'une ou de plusieurs stations de base, et joue le rôle de passerelle entre des stations de base et un centre de commutation du service mobile. Il effectue la gestion des ressources radioélectriques et des prétraitements qui permettent de rendre le centre de commutation du service mobile moins spécifique de l'application "radiotéléphonie mobile", par rapport à un centre de commutation de téléphonie classique.

Un centre de commutation du service mobile assure l'interfonctionnement du système de radiotéléphonie cellulaire avec les réseaux fixes de télécommunications : soit directement, soit au travers d'une unité d'interfonctionnement. La couverture radioélectrique d'un territoire est obtenue par la juxtaposition de zones comportant une ou plusieurs cellules, chaque cellule étant desservie par une station de base. Un centre de commutation du service mobile gère les communications des abonnés mobiles situés dans une ou plusieurs zones. Ses fonctions comportent certaines spécificités imposées par le caractère mobile des abonnés notamment la gestion du transfert automatique des communications d'une cellule à une autre. Il présente en outre une différence notable avec un commutateur du réseau fixe de télécommunications : Il ne possède pas en propre les données des abonnés mobiles présents dans ses zones de localisation et la gestion associée.

Cette gestion est réalisée par une entité appelée enregistreur de localisation des "visiteurs" et notée VLR, les données de ces mobiles étant rapatriées depuis une entité centrale appelée enregistreur de localisation nominal, et notée HLR. Lorsqu'un abonné mobile se déplace, il passe successivement d'une zone de localisation à une autre. Son déplacement est signalé automatiquement par l'équipement mobile aux stations de base qui en informent le VLR qui supervise les zones de localisation correspondantes.

On appelle ici "inscription" la procédure par laquelle un VLR récupère auprès du HLR les données d'un abonné mobile qu'il ne connaissait pas et qui signale son entrée dans une zone de localisation que ce VLR supervise. On appelle ici "désinscription" la procédure par laquelle un VLR libère les ressources qu'il avait allouées à un abonné, lorsqu' il quitte les zones du VLR, à la suite de la notification de cet événement par le HLR. On appelle "mise à jour de localisation interne" la procédure par laquelle un VLR met à jour l'information relative à la zone de localisation d'un mobile qu'il connaît, et qui signale un passage entre deux zones supervisées par ce VLR.

La procédure d'inscription consiste essentiellement à : authentifier le mobile, et acquérir auprès du HLR les données qui décrivent l'abonnement auquel il a souscrit. Le HLR a essentiellement 2 fonctions : être la base de données de référence du système de radiotéléphonie cellulaire; et connaître à chaque instant la localisation des abonnés mobiles pour permettre l'acheminement des communications "arrivées". Dans un réseau national il peut y avoir un ou plusieurs HLR. Dans le système de radiotéléphonie cellulaire, les abonnés mobiles sont identifiés par : un numéro d'annuaire qui leur permet d'être appelés par un autre abonné du réseau fixe ou par un autre abonné mobile, et par une identité internationale et permanente, notée IMSI, attribuée à l'équipement de la station mobile, et qui est utilisée sur le réseau fixe et éventuellement sur le segment radioélectrique.

Afin de pouvoir garantir la confidentialité de l'identité internationale, le VLR alloue à chaque abonné une identité temporaire, notée TMSI, qui est utilisée aussi souvent que possible, sur le segment radioélectrique, à la place de l'identité internationale. Les spécifications du Groupe Spécial Mobile définissent l'utilisation des différentes identités de l'abonné mobile, au cours des procédures.

La base de données d'un HLR contient la description de tous les abonnés mobiles dont il a la charge. Cette base de données est gérée par un système de gestion de données en temps réel, noté SGDTR, qui offre un accès rapide aux données. Les données de la base sont organisées en tables à 2 dimensions. Chaque ligne d'une table, encore appelée n-uplet, est affectée à un abonné différent et chaque colonne contient un type d'information décrivant les abonnés, par exemple des informations sur un service auquels ils peuvent souscrire. L'intersection d'une ligne et d'une colonne correspond donc à une information relative à un abonné.

La base de données d'un HLR contient, pour chaque abonné mobile :
- son numéro d'annuaire dans le plan national;
- la liste des services auxquels il a souscrit;
- son identité internationale, notée IMSI;
- sa localisation, c'est à dire l'identité du VLR supervisant la zone où il se trouve;

des données permettant l'authentification du mobile, appelées triplets d'authentification dans la suite de ce texte.

La base de données d'un HLR est mise à jour : lorsqu' un abonnement est créé, modifié ou résilié par l'exploitant du réseau; lorsqu'un abonné modifie un de ses services, par exemple un numéro de renvoi; lorsqu'un abonné change de VLR; lorsque de nouveaux triplets d'authentification doivent être calculés. Le SGDTR permet de définir des clés d'accès à chaque table. L'IMSI et le numéro d'annuaire sont des clés d'accès aux données de l'abonné. Lors de l'allocation d'un n-uplet,le SGDTR fournit le numéro de ce n-uplet qui est une référence interne de la base de données, permettant un accès plus rapide aux données que l'utilisation d'une clé d'accès comme l'IMSI.

Chaque VLR posséde également une base de données, gérée par le même système de gestion des données en temps réel, SGDTR. Cette base contient les données décrivant les abonnés mobiles qui se trouvent dans une des zone de localisation supervisées par le VLR, il s'agit principalement de :
- son numéro d'annuaire dans le plan national;
- la liste des services auxquels il a souscrit;
- son identité internationale, IMSI;
- son identité temporaire, TMSI;
- sa zone de localisation;
- ses triplets d'authentification.

Le numéro d'annuaire, l'identité internationale IMSI et l'identité temporaire TMSI sont des clés d'accès aux données de l'abonné dans la base de données du VLR.

Les évolutions de la base de données du VLR sont très fréquentes puisqu'elle est modifiée au rythme des inscriptions/désinscriptions, des mises à jour de localisation interne, des mises à jour de données d'abonnement des abonnés mobiles dans le VLR, et des renouvellements de triplets d'authentification. La procédure d'inscription demande au SGDTR d'allouer un n-uplet dans les différentes tables où sont rangées les informations décrivant les abonnés, et la procédure de désinscription demande la libèration de tous ces n-uplets. Les données décrivant le mobile sont reçues soit du VLR qui le supervisait précédemment (triplets d'authentification), soit du HLR (toutes données). La procédure d'inscription informe le HLR de la nouvelle localisation du mobile.

Le SGDTR ne gère que des tables de taille fixe. Il est donc impossible d'allouer un nombre de n-uplets supérieur à la taille de la table. Pour le HLR, il ne s'agit pas d'une contrainte puisque le nombre d'abonnés est contrôlé par l'exploitant du réseau. Par contre, pour le VLR qui gère des abonnés qui sont mobiles par définition, il est nécessaire de prévoir un dispositif permettant de prendre en compte les contraintes suivantes :
- dès qu'un mobile est inscrit dans un VLR, celui-ci lui alloue un n-uplet dans la base de données;
- ces données ne sont utiles que si le mobile se manifeste soit en se déplacant soit en émettant un appel.

La demande de brevet EP-A- 260763 décrit un procédé de gestion de la base de données d'un enregistreur de localisation de visiteurs consistant à stocker dans cette base de données, pour chaque abonné mobile, des mots identifiant une ou plusieurs zones géographiques dans lesquelles cet abonné a manifesté récemment sa présence. Chaque mot identifiant une zone est accompagné d'un autre mot indiquant l'heure à laquelle la station mobile a manifesté sa présence dans cette zone. La probabilité de présence de l'abonné dans chacune de ces zones est estimée en comparant les durées écoulées depuis les dernières communications ayant eu lieu à partir de ces zones respectivement, pour l'abonné considéré. Un mot identifiant une zone, pour un abonné, est effacé de la base de données de l'enregistreur de localisation de visiteurs lorsque cet abonné n'a pas établi ou reçu de communication dans cette zone dans un délais prédéterminé. Ce délai est plus long lorsqu' il ne reste plus qu'un mot, identifiant une zone, qui est stocké dans la base de données. Un abonné qui n'est plus dans l'une des zones desservie par l'enregistreur considéré n'occupe donc plus de place dans cette base de données, au bout d'un certain délai. Il subsiste cependant un risque de saturation de cette base de données.

Il peut arriver, à l'heure chargée, que le nombre d'abonnés mobiles présents dans les zones de localisation du VLR dépasse sa capacité. Dans ce dernier cas, le VLR a le choix : soit de refuser l'inscription des nouveaux mobiles, soit de désinscrire unilatéralement, les abonnés mobiles qui ne sont pas manifestés depuis un certain temps. Le VLR peut toujours récupérer au HLR, les données d'un mobile qu'il a été désinscrit, mais au prix d'une procédure coûteuse en temps de calcul, ce qui est à éviter lorsqu'il fonctionne à pleine charge.

Le VLR est susceptible de subir des pannes partielles ou totales, qui provoquent le besoin de rétablir les données des abonnés au fur et à mesure qu'ils se manifestent, par une procédure dite de restauration du VLR.

Le but de l'invention est de proposer un procédé de protection de la base de données d'un enregistreur de localisation de visiteurs, permettant de faire fonctionner cet enregistreur de localisation de visiteurs à sa limite de saturation sans qu'il en résulte de perturbations sensibles pour les abonnés mobiles, et en maintenant le trafic au voisinage de son maximum. L'invention prend en compte le risque normal de saturation de la base de donnée précédemment évoqué; ainsi que le risque supplémentaire résultant du fait qu'un abonné mobile peut sortir de la zone desservie par un VLR, sans que celui-ci en soit informé, à la suite d'une erreur ou d'un mauvais fonctionnement. Par ailleurs, l'invention prend en compte le risque de confusion entre deux abonnés, introduit par la désinscription unilatérale d'un abonné dans le but de réutiliser son identité temporaire, ou introduit par une restauration du VLR.

Le procédé selon l'invention consiste notamment à attribuer, à chaque abonné, un indicateur horaire; et à l'inscrire, parmi les données de l'abonné, dans la base de données du VLR. Pour être inscrit dans la base de données, cet indicateur horaire, est intégré au mot d'identité temporaire TMSI, qui est alloué par le VLR à l'abonné, et qui est inscrit dans le n-uplet de l'abonné.

La structure du mot binaire constituant une identité temporaire d'abonné mobile est définie partiellement par la recommandation numéro 03.03. version 3.2.1 - du Groupe Spécial Mobile. Cette recommandation précise que ce mot binaire ne doit pas comporter plus de quatre octets, mais sa structure peut être choisie librement par chaque administration pour répondre à des besoins locaux. Pour éviter l'attribution d'une même identité temporaire à deux abonnés mobiles, après une restauration de l'enregistreur de localisation de visiteurs, elle suggère qu'une partie du mot binaire soit fonction de l'instant auquel il est attribué, ou bien qu'elle comporte un champ qui soit modifié lorsque l'enregistreur de localisation de visiteurs est restauré. Il n'est pas prévu de procédé de protection contre la saturation de la base de données des VLR, permettant de prendre en compte les problèmes précédemment évoqués.

Selon l'invention, un procédé de protection contre la saturation de la base de données d'un enregistreur de localisation de visiteurs, pour un système de radiotéléphonie celllulaire, consistant à :
- attribuer un mot d'identité temporaire d'abonné mobile pour chaque abonné mobile qui signale sa présence pour la première fois dans une zone géographique desservie par l'enregistreur, ce mot comportant un premier champ qui désigne la référence interne d'un n-uplet d'une table de la base de données, et un second champ qui est fonction de l'instant où le mot d'identité temporaire est attribué;
- inscrire chaque mot d'identité temporaire dans le n-uplet désigné par le premier champ;
- libérer ce n-uplet lorsque l'abonné mobile manifeste sa présence dans une zone correspondant à un autre enregistreur;
- attribuer un nouveau mot d'identité temporaire pour un abonné chaque fois que cet abonné signale de nouveau sa présence dans une zone desservie par l'enregistreur, aprés un silence de durée supérieure à une valeur de seuil, le premier champ étant inchangé, et le deuxième champ étant fonction de l'instant où l'abonné signale de nouveau sa présence;
- inscrire ce nouveau mot d'identité temporaire dans le n-uplet désigné par le premier champ;
- libérer périodiquement, dans la base de données,des n-uplets correspondant à des mots d'identité temporaire dont les seconds champs correspondent à des instants antérieurs à un premier instant de seuil ;

est caractérisé en ce qu'il consiste en outre à libérer, dans la base de données, des n-uplets correspondant à des mots d'identité temporaire dont les seconds champs correspondent à des instants, antérieurs à un second instant de seuil, plus récent que le premier, lorsque le remplissage de la base de données approche de la saturation.

Une procédure de routine permet donc de rechercher et de libérer des n-uplets de la base de données, qui sont occupés par les données d'abonnés qui ne se sont pas manifestés depuis longtemps. Pour mesurer la durée de la non-manifestation d'un abonné, le procédé consiste à prévoir, parmi les données stockées dans chaque n-nuplet, un indicateur horaire qui est fonction de l'instant où l'abonné s'est manifesté pour la dernière fois. Cet indicateur horaire est intégré au mot d'identité temporaire qui est stocké dans ce n-nuplet. Ce mot d'identité temporaire étant utilisé pour établir les communications entre l'abonné et le VLR, l'indicateur horaire permet en outre d'éviter une confusion entre deux abonnés qui ont eu successivement un même n-nuplet pour stocker leurs données.

Le procédé selon l'invention consiste en outre à libérer, dans la base de données, des n-uplets correspondant à des mots d'identité temporaire un peu plus récents, dans les cas où la procédure de routine ne suffit pas.

L'invention sera mieux comprise et d'autres détails apparaîtront à l'aide de la description ci-dessous et des figures l'accompagnant :
- les figures 1 et 2 représentent deux exemples de formats de mots d'identité temporaire d'abonné mobile, pour la mise en oeuvre du procédé selon l'invention;
- la figure 3 illustre un exemple de mise en oeuvre de ce procédé;
- la figure 4 repésente l'organigramme d'un exemple de mise en oeuvre du procédé selon l'invention, pour libérer périodiquement des n-uplets, par une procédure de routine;
- la figure 5 représente l'organigramme d'un exemple de mise en oeuvre du procédé selon l'invention, pour libérer des n-uplets, par une procédure d'urgence;
- les figures 6A et 6B représentent l'organigramme d'un exemple de mise en oeuvre du procédé selon l'invention pour "rafraîchir" l'identité temporaire d'un abonné mobile lorsque l'enregistreur de localisation de visiteur reçoit un appel de cet abonné.

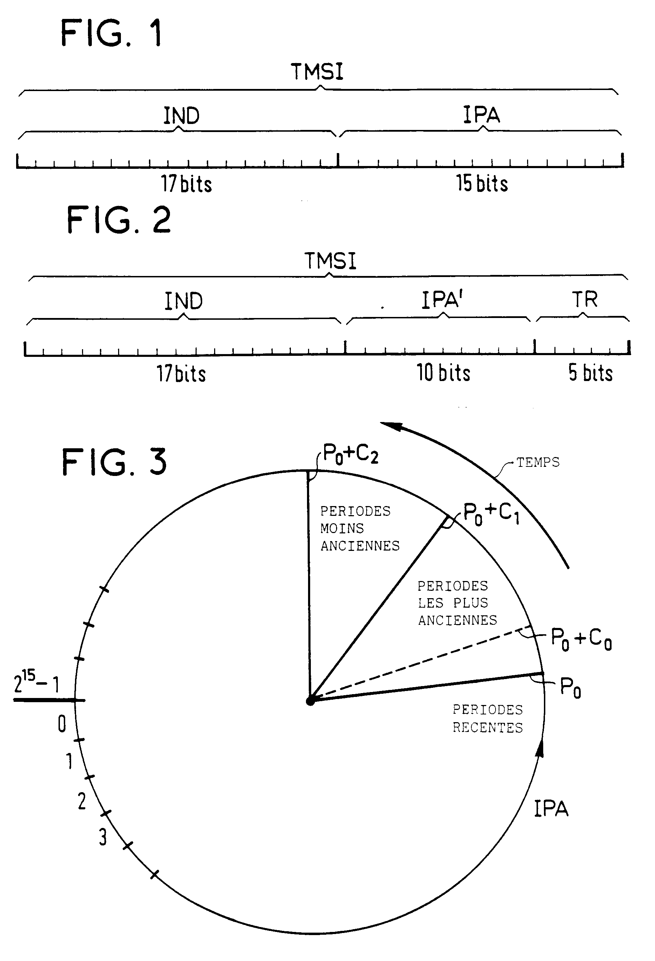

La figure 1 représente le format d'un mot binaire, noté TMSI, dans un exemple de mise en oeuvre du procédé selon l'invention. Il est constitué d'un champ nommé IND qui contient la référence interne du n-uplet où sont rangées les données del'abonné mobile; et d'un champ nommé IPA qui contient un indicateur horaire. Le champ IND a une taille de 17 bits et le champ IPA une taille de 15 bits. Les 17 bits du champ IND permettent d'adresser jusqu'à 128 000 abonnés dans un VLR. L'indicateur horaire est le résultat d'un comptage de périodes temporelles, modulo 2¹⁵. Il permet de distinguer 2¹⁵ périodes temporelles.

Selon une variante du procédé selon l'invention, il consiste en outre à sauvegarder le résultat du comptage et à l'incrémenter d'une unité chaque fois que le VLR subit un incident provoquant un effacement partiel ou total.

La somme des tailles des 2 champs est imposée,mais leur répartition en 17 bits et 15 bits n'est donnée ici qu'à titre indicatif. Il est en effet tout à fait possible d'avoir une répartition différente, par exemple 18 bits et 14 bits, ce qui permettrait de réaliser des VLR ayant une capacité de 256 000 abonnés.

Selon une variante du procédé selon l'invention, il consiste en outre à prévoir, dans le mot d'identité temporaire, un indicateur de restauration de l'état de l'enregistreur, et à l'incrémenter chaque fois que l'enregistreur de localisation de visiteurs subit un incident provoquant un effacement partiel ou total de sa mémoire.

La figure 2 représente cet autre format envisageable pour le mot d'identité temporaire TMSI attribué à un abonné mobile. Selon ce format, un numéro de n-uplet IND est codé sur 17 bits, un indicateur horaire IPA′ est codé sur 10 bits, et un indicateur de restauration IR est codé sur 5 bits. L'indicateur horaire IPA′ est seulement le résultat du comptage de périodes temporelles, modulo 2¹⁵.

L'indicateur IR est le résultat du comptage, modulo 2⁵ des restaurations de l'enregistreur. Ce format a pour avantage de permettre de distinguer nettement les changements d'identité temporaire dus à l'écoulement du temps et les changements d'identité temporaire dus à des restaurations de l'état de l'enregistreur. Par contre, ce format a pour inconvénient une réduction du nombre de valeurs que peut prendre l'indicateur horaire puisqu'il ne prend que les valeurs de 0 à 2¹⁰ - 1.

Dans un mode de réalisation préférentiel, le champ IPA ou IPA′ utilisé pour indiquer la période horaire d'affectation est incrémenté régulièrement, toutes les 30 minutes, ce qui permet, avec un indicateur horaire de 15 bits, d'attribuer des identités temporaires différentes pendant un cycle de durée voisine de deux ans. Il permet donc de détecter les identités temporaires qui correspondent à des abonnés qui ne manifestent pas leur présence pendant une longue durée, à condition de prévoir une procédure de rafraîchissement de l'identité temporaire d'un abonné mobile chaque fois qu'il manifeste sa présence dans une zone desservie par le VLR considéré.

Selon une autre variante du procédé selon l'invention, les périodes d'affectation peuvent avoir des durées variables telles que, pendant chaque période, le nombre d'identités temporaires attribuées à des abonnés mobiles soit égal à une valeur maximale fixée. Ainsi la libération des TMSI d'une période horaire libère un nombre sensiblement constant d'identités, bien que les variations du trafic amènent l'enregistreur à attribuer un nombre variable d'identités temporaires par unité de temps. Cette dernière variante du procédé selon l'invention (périodes d'affectation de durée variable) est également applicable au procédé qui consiste à avoir des TMSI constituées de 3 champs : IND, IPA′et IR; ou de 2 champs : IND, IPA.

Notons qu'il est préférable, dans le cas de périodes d'affectation de durée variable, de préserver le nombre de périodes dans une durée donnée, par exemple 24 heures, afin de préserver la signification temporelle du champ IPA de la TMSI.

Quand la base données du VLR est loin de la saturation, la procédure normale de gestion des n-uplets est la suivante. Lorsqu'un VLR accepte l'inscription d'un abonné mobile, il réserve pour cet abonné un n-uplet disponible dans la base de données et lui alloue une TMSI qui contient : dans le champ IND, la référence interne désignant ce n-nuplet dans la base de données; et dans le champ IPA, la valeur courante attribuable à l'indicateur horaire. Lorsque l'abonné mobile quitte le VLR, celui-ci libère le n-uplet correspondant dans la base de données, ainsi que la TMSI.

Une procédure est lancée périodiquement pour libérer unilatéralement, c'est à dire sans en informer les mobiles concernés, les n-uplets de la base de données correspondant aux indicateurs horaires les plus anciens et donc les TMSI correspondantes. Ce "nettoyage" a pour but de protéger le système contre les risques de saturation décrits précédemment.

Dans l'hypothèse où l'indicateur horaire est incrémenté toutes les demi-heures, il a une période de 2 ans, et les TMSI libérées unilatéralement seront vieilles d'au moins d'un an, par exemple. Il est extrêmement peu probable qu'un abonné qui ne s'est pas manifesté depuis un an, se manifeste de nouveau. Toutefois, si ce cas arrivait, le VLR détecterait une anomalie par le fait que la référence interne de la base de données correspond soit à un n-uplet libre, soit à un n-uplet contenant une TMSI allouée au cours d'une période horaire différente de celle de la TMSI envoyée par l'abonné.

La valeur attribuable à l'indicateur horaire est sauvegardée dans une mémoire de masse, après chaque incrémentation. En cas d'incident au VLR, la valeur attribuable à l'indicateur est restaurée, et incrémenté d'une unité, écourtant ainsi la durée de la période en cours, ce qui permet de distinguer les identités temporaires attribuées après la restauration, de celles attribuées avant la restauration.

La figure 3 illustre l'attribution des valeurs de l'indicateur horaire au cours du temps. L'indicateur prend successivement toutes les valeurs de 0 à 2¹⁵-1. A l'instant considéré, l'indicateur prend la valeur la valeur P₀. A cause du caractère cyclique de l'attribution des valeurs de l'indicateur IPA, les indicateurs les plus anciens sont ceux qui appartiennent à l'intervalle P₀ à P₀ + C₀ modulo 2¹⁵.

Le VLR met en oeuvre périodiquement une procédure de routine consistant à effacer de la mémoire les données correspondant à des mots d'identité temporaire dont l'indicateur IPA a une valeur qui est comprise entre les valeurs P₀ + C₀ et P₀ + C₁ modulo 2¹⁵. Ces valeurs correspondent aux identités temporaires les plus anciennes. La constante C₀ est une marge de sécurité au moins égale à une unité et la constante C₁ est égale à quelques unités. C1 définit un premier instant de seuil.

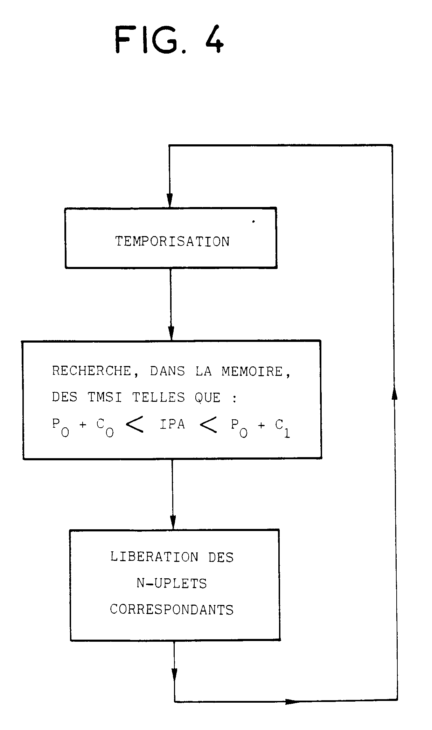

La figure 4 représente l'organigramme d'un exemple de mise en oeuvre du procédé selon l'invention, pour libérer périodiquement des n-uplets correspondant aux TMSI ayant les champs IPA les plus anciens. Cette procédure comporte tout d'abord une temporisation qui définit la période séparant deux applications de cette procédure. Sa durée est égale, par exemple, à la moitié de la durée de la période de l'indicateur horaire. Lorsque la temporisation est terminée, la procédure consiste à rechercher les TMSI tels que la valeur de l'indicateur IPA est comprise entre P₀ + C₁ modulo 2¹⁵ et P₀ + C₀ modulo 2¹⁵. Puis elle consiste à les libérer et à recommencer la temporisation.

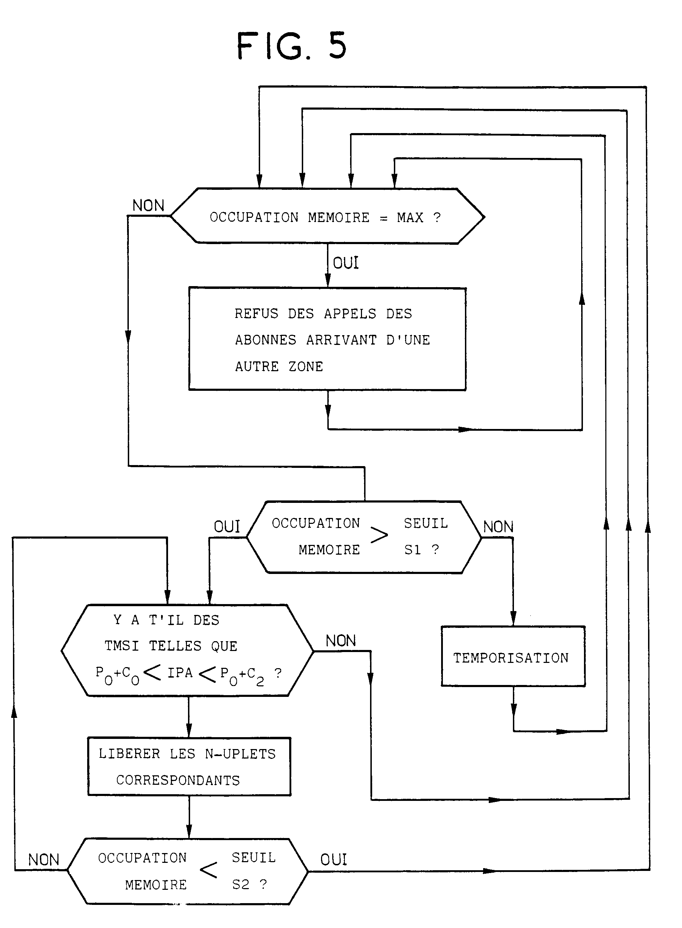

La figure 5 représente l'organigramme d'un exemple de mise en oeuvre du procédé selon l'invention, pour libérer des n-uplets correspondant à des TMSI plus récentes, lorsque le remplissage de la base de données approche de la saturation. Une première étape de la procédure consiste à comparer la valeur de l'occupation de la mémoire à une valeur maximale MAX qui correspond à la saturation. Si la valeur de l'occupation est égale à sa valeur maximale, la procédure consiste à refuser les appels de nouveaux abonnés mobiles qui viennent d'une zone non desservie par l'enregistreur considéré, puis à recommencer la première étape de la procédure, pour voir si l'occupation de la mémoire reste à sa valeur maximale.

Si la valeur de l'occupation n'est pas maximale, elle est comparée à une valeur de seuil S1 qui est inférieure à la valeur maximale mais qui est voisine tout de même de la saturation, par exemple 95 %.

Si la valeur de l'occupation est inférieure au seuil S1, la procédure consiste en une temporisation, puis un retour à la première étape de la procédure.

Si la valeur de l'occupation est supérieure ou égale au seuil S1, la procédure consiste à rechercher des n-uplets correspondant à des TMSI dont l'indicateur horaire est compris entre P₀ + C₁ modulo 2¹⁵ et P₀ + C₂ modulo 2¹⁵.

S'il n'y en a pas , la procédure consiste ensuite à recommencer la première étape, consistant à comparer la valeur de l'occupation à la valeur maximale.

S'il y en a, elle consiste à libérer les n-uplets correspondant, puis à comparer la valeur de l'occupation à une seconde valeur de seuil, S2, inférieure à S1, par exemple S2 = 80 %. Si l'occupation est inférieure à S2, la procédure consiste à recommencer la première étape. Sinon, elle consiste à rechercher de nouveau des n-uplets correspondant à des TMSI dont l'indicateur horaire est compris entre P₀ + C₁ modulo 2¹⁵ et P₀ + C₂ modulo 2¹⁵. L'arrêt de la procédure d'urgence, sur les TMSI dont l'indicateur horaire est égal à P₀ + C₂ modulo 2¹⁵, est justifié par le fait qu'il apparaît une probabilité importante pour que des abonnés désincrits unilatéralement par le VLR, se manifestent de nouveau, par exemple en changeant de zone de localisation. Dans un tel cas, le VLR recevant une TMSI qui n'existe plus dans la base de données, il doit procéder à une authentification du mobile puis redemander ses caractéristiques auprès du HLR. Il est clair que cette tâche s'ajoute à celles du traffic courant, et qu'il faut donc éviter une telle surcharge du VLR.

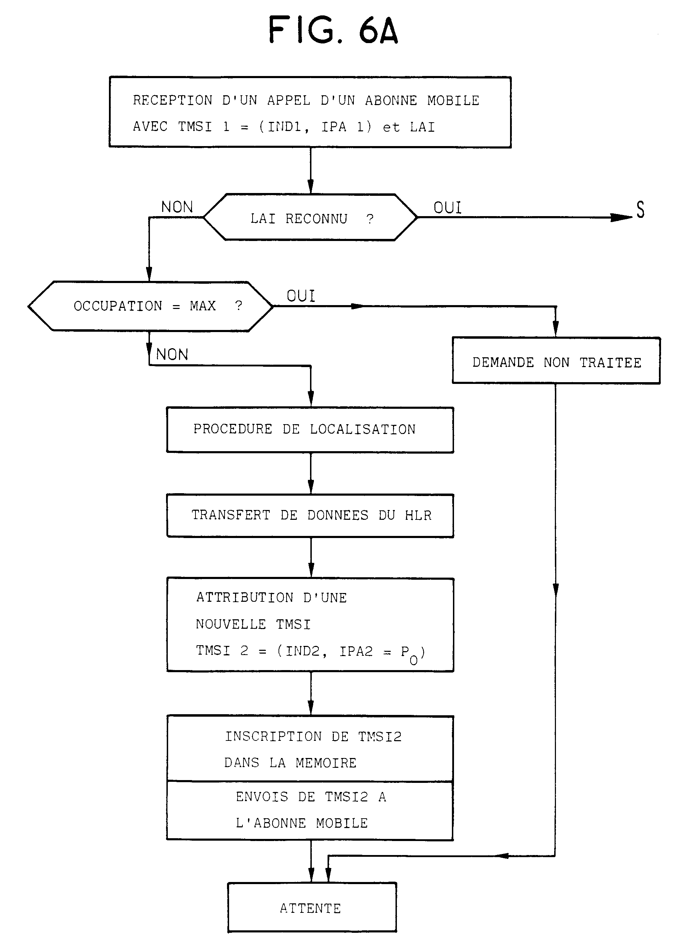

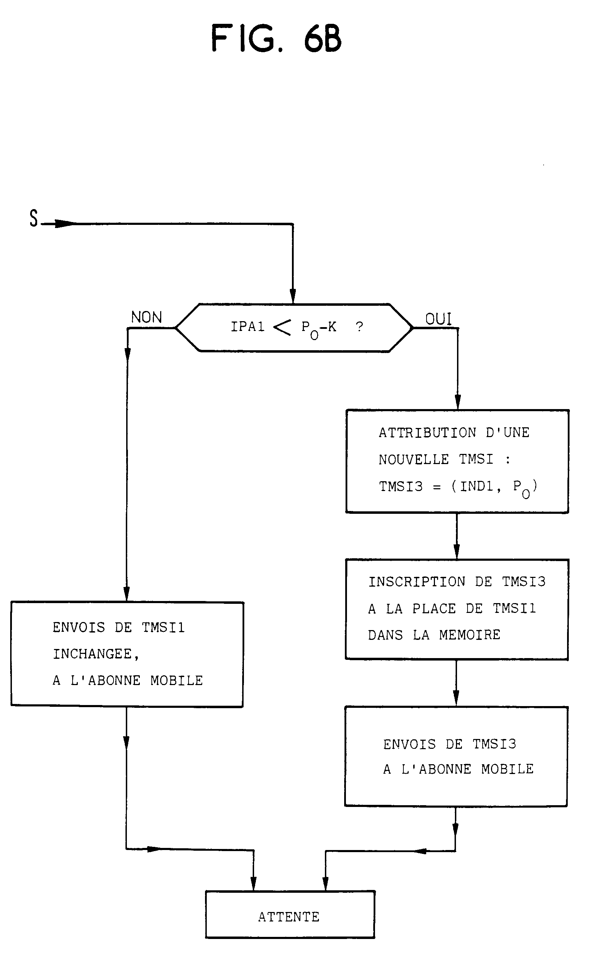

Les figures 6A et 6B représentent l'organigramme d'un exemple de mise en oeuvre du procédé selon l'invention pour attribuer une identité temporaire à un abonné mobile qui manifeste sa présence dans une zone correspondant à l'enregistreur considéré et, plus particulièrement, pour "rafraîchir" l'identité temporaire d'un abonné mobile qui a déjà eu au moins une liaison avec l'enregistreur considéré.

Cette procédure commence à la réception d'un appel d'un abonné mobile, soit parce qu'il a changé de zone et qu'il souhaite déclencher une procédure, dite de localisation, qui permet au système de connaître sa nouvelle localisation, soit parce que l'abonné mobile demande l'établissement d'une communication, alors qu'il a déjà manifesté sa présence dans la zone. Son appel comporte notamment son identité temporaire TMSI1 qui lui a été attribuée antérieurement et un numéro de zone, LAI, qui désigne la dernière zone dans laquelle sa localisation a été faite par le système.

La procédure consiste tout d'abord à comparer le numéro de zone envoyé par l'abonné avec les numéros de zone correspondant à l'enregistreur considéré. Si son numéro de zone n'est pas reconnu, l'abonné mobile vient d'une zone non desservie par cet enregistreur, et par conséquent il nécessitera l'allocation d'une TMSI. La procédure consiste alors à comparer la valeur de l'occupation de la mémoire à sa valeur maximale. Si l'occupation de la mémoire est déjà à sa valeur maximale, l'inscription du mobile est refusée, la demande de localisation de l'abonné ne pouvant pas être traitée. Si l'occupation n'est pas maximale, la procédure de localisation de l'abonné est mise en oeuvre.

En résumé, l'enregistreur informe le HLR (dont il déduit l'adresse de l'IMSI du mobile) de l'adresse du nouveau VLR qui le gère. En retour, l'enregistreur de localisation nominal HLR transmet à l'enregistreur de localisation de visiteurs, les données d'abonnés qui sont nécessaires à la gestion de ses communications. En outre, l'enregistreur de localisation nominal, signale à l'ancien enregistreur de localisation de visiteurs dont dépendait l'abonné, qu'il peut l'effacer de sa mémoire. La procédure de localisation consiste ensuite à attribuer à l'abonné une nouvelle identité temporaire : TMSI2 = (IND2, IPA2), où IND2 correspond à un n-uplet libre de la base de données du VLR et où IPA2 est égal à P₀ qui est à l'instant considéré, la valeur attribuable à l'indicateur horaire.

La procédure consiste ensuite à ranger l'identité temporaire TMSI2 dans un n-uplet dont le numéro est contenu dans IND2. Enfin, elle consiste à envoyer sa nouvelle identité temporaire TMSI2 à l'abonné mobile, puis à attendre un autre appel.

La figure 6B représente la partie d'organigramme traitant le cas, référencé S, où le numéro de zone envoyé par l'abonné mobile est égal à l'un des numéros des zones desservies par le VLR considéré. Si l'abonné mobile a changé de zone, par rapport à la zone où il était lors de la dernière procédure de localisation, l'enregistreur doit mettre en mémoire le nouveau numéro de zone à la place de l'ancien, mais il doit en outre "rafraîchir" l'identité de cet abonné. La procédure consiste à comparer à une valeur de seuil P₀-K modulo 2¹⁵, à la valeur de l'indicateur horaire, IPA1, de la dernière identité temporaire lui ayant été attribuée. Si l'indicateur IPA1 est dans l'intervalle P₀ à P₀-K, modulo 2¹⁵, l'identité temporaire TMSI1 est inchangée, car elle a été attribuée récemment.

K est une constante qui peut être nulle. Elle est choisie, de préférence, égale à quelques unités. Cette constante K permet de maintenir inchangée chaque identité temporaire pendant K périodes, afin d'éviter des rafraîchissements inutilement fréquents. La procédure consiste ensuite à envoyer à l'abonné une nouvelle identité temporaire qui en fait est constituée de la précédente identité TMSI1, sans aucun changement, puis elle consiste à attendre un nouvel appel.

Si l'indicateur IPA1 n'est pas dans l'intervalle P₀ à P₀-K modulo 2¹⁵ , cela signifie que l'identité temporaire de l'abonné n'est pas récente, elle doit être "rafraîchie" mais il n'est pas nécessaire, pour autant, que les données de l'abonné changent de place dans la base de données. La procédure consiste donc à attribuer une nouvelle identité temporaire TMSI3 dont le premier champ IND1 est inchangé et dont le second champ IPA contient la valeur P₀ attribuable, à l'instant considéré, à l'indicateur horaire de toute nouvelle identité temporaire. La procédure consiste ensuite à mettre à jour dans la base de données la valeur de l'indicateur horaire; puis envoyer la nouvelle identité temporaire à l'abonné mobile; puis attendre un nouvel appel.

L'intérêt de la structure choisie pour l'identité temporaire apparaît dans les procédures décrites précédemment: le champ IND permet, lorsque l'abonné se signale par sa TMSI, d'avoir un accès rapide à ses données dans la base de données; le champ IPA, distinct du champ IND, permet d'allouer une nouvelle valeur de TMSI sans changer le champ IND, ce qui maintient 1'accès rapide aux données sans avoir à déplacer ces données dans la base.

Le fait de transmettre la valeur de l'indicateur horaire de l'abonné appellant, vers le VLR, permet au VLR de détecter une anomalie lorsque le n-uplet de cet abonné a été utilisé pour un autre abonné, dans les cas mentionnés précédemment.

Lorsqu'un mot d'identité temporaire est attribué à un abonné mobile, ce mot est transmis à l'abonné mobile et ce dernier envoie un acquittement. Si l'enregistreur ne reçoit pas d'acquittement, il ne peut pas savoir si le mot d'identité temporaire a été reçu ou non par l'abonné mobile. Quoi qu'il en soit, l'enregistreur met en mémoire la nouvelle identité, à la place de l'ancienne.

L'enregistreur considère alors que ce mot d'identité temporaire sera acceptable comme identifiant l'abonné dans les contacts déclenchés à l'initiative de l'abonné. En revanche, si l'enregistreur déclenche lui-même un contact avec cet abonné mobile, il utilise l'identité internationale qui est une caractéristique permanente de l'abonné mobile. Considérons les cas où l' abonné n'a pas reçu la nouvelle identité temporaire. Si celle-ci avait été attribuée par l'enregistreur considéré, qui dessert la zone où est situé le mobile à l'instant considéré, et si l'abonné mobile manifeste sa présence en utilisant son ancienne identité temporaire, l'enregitreur ne la reconnaîtra pas puisqu'elle a été effacée. Il demandera donc à l'abonné mobile son identité internationale, puis lui affectera une identité temporaire qui sera différente de celle qui n'avait pas été reçue.

Le procédé selon l'invention peut être mis en oeuvre au moyen d'un système de gestion de données en temps réel exécutable sur un système multiprocesseurs de type connu, utilisé classiquement pour gérer un système de radiotéléphonie cellulaire, l'enregistreur de localisation de visiteurs ne constituant d'ailleurs qu'une des parties fonctionnelles d'un tel système de gestion. Par exemple, ce système multiprocesseurs peut être le système Alcatel 8300 commercialisé par la société ALCATEL.C.I.T. La programmation de ce système multiprocesseur, pour mettre en oeuvre le procédé selon l'invention, est à la portée de l'homme de l'art.

## Revendications

1. Procédé de protection contre la saturation de la base de données d'un enregistreur de localisation de visiteurs, pour un système de radiotéléphonie cellulaire, consistant à :
- attribuer un mot d'identité temporaire d'abonné mobile (TMSI) pour chaque abonné mobile qui signale sa présence pour la première fois dans une zone géographique desservie par l'enregistreur, ce mot comportant un premier champ (IND) qui désigne une référence interne d'un n-uplet d'une table de la base de données, et un second champ (IPA) qui est fonction de l'instant où le mot d'identité temporaire est attribué;
- inscrire chaque mot d'identité temporaire dans le n-uplet désigné par le premier champ (IND);
- libérer ce n-uplet lorsque l'abonné mobile manifeste sa présence dans une zone correspondant à un autre enregistreur;
- attribuer un nouveau mot d'identité temporaire (TMSI) pour un abonné chaque fois que cet abonné signale de nouveau sa présence dans une zone desservie par l'enregistreur, aprés un silence de durée supérieure à une valeur de seuil (K), le premier champ (IND) étant inchangé, et le deuxième champ (IPA) étant fonction de l'instant où l'abonné signale de nouveau sa présence;
- inscrire ce nouveau mot d'identité temporaire dans le n-uplet, désigné par le premier champ (IND);
- libérer périodiquement, dans la base de données, des n-uplets correspondant à des mots d'identité temporaire dont les seconds champs (IPA) correspondent à des instants (P₀ + C₁ à P₀ + C₀) antérieurs à un premier instant de seuil ;
- libérer, dans la base de données, des n-uplets correspondant à des mots d'identité temporaire dont les seconds champs (IPA) correspondent à des instants (P₀ + C₂ à P₀ + C₀), antérieurs à un second instant de seuil, plus récent que le premier, lorsque le remplissage de la base de données approche de la saturation.

2. Procédé selon la revendication 1, caractérisé en ce que pour attribuer un mot d'identité temporaire (TMSI) comportant un second champ (IPA) qui est fonction de l'instant où le mot d'identité temporaire est attribué, il consiste à prendre pour second champ (IPA) le résultat P₀ du comptage de périodes temporelles, modulo un nombre fixé; et à prendre pour durée du cycle de comptage, entre deux passages à zéro de ce résultat, une valeur supérieure à la durée maximale probable du silence d'un abonné.

3. Procédé selon la revendication 2, caractérisé en ce que, pour attribuer un mot d'identité temporaire (TMSI) comportant un second champ (IPA) qui est fonction de l'instant où le mot d'identité temporaire est attribué, il consiste en outre à sauvegarder le résultat du comptage et à l'incrémenter d'une unité chaque fois que l'enregistreur de localisation de visiteurs subit un incident provoquant un effacement partiel ou total de la mémoire.

4. Procédé selon la revendication 1, caractérisé en ce que pour attribuer un mot d'identité temporaire comportant un second champ qui est fonction de l'instant où le mot d'identité temporaire est attribué, il consiste à prendre pour second champ:
- un premier mot binaire (IPA′) dont la valeur est le résultat du comptage de périodes temporelles, modulo un nombre fixé; la durée du cycle de comptage, entre deux passages à zéro de ce résultat, étant choisie supérieure à la durée maximale probable d'un silence d'un abonné;
- un second mot binaire (IR) dont la valeur est incrémentée d'une unité chaque fois que l'enregistreur de localisation de visiteurs subit un incident provoquant un effacement partiel ou total de sa mémoire.

5. Procédé selon l'une des revendications 2 ou 4, caractérisé en ce qu'il consiste, en outre, à prendre des périodes temporelles ayant généralement une durée fixe.

6. Procédé selon l'une des revendications 2 ou 4, caractérisé en ce qu'il consiste à prendre pour périodes temporelles des intervalles de temps tels que dans chaque intervalle de temps il y a un même nombre maximal, prédéterminé, d'identités temporaires attribuées à des abonnés mobiles qui signalent leur présence.

## Patentansprüche

1. Verfahren zum Schutz gegen die Sättigung der Datenbasis einer Registriereinheit für die Besucherortung in einem zellularen Funkfernsprechsystem, wobei das Verfahren darin besteht:
- ein vorübergehendes Mobilteilnehmer-Identitätswort (TMSI) jedem mobilen Teilnehmer zuzuweisen, der zum ersten Mal seine Anwesenheit in einer von der Registriereinheit bedienten geographischen Zone anzeigt, wobei das Wort ein erstes Feld (IND), das eine interne Bezugsangabe eines n-Uplets einer Tabelle der Datenbasis bezeichnet, und ein zweites Feld (IPA) aufweist, das vom Zeitpunkt abhängt, in welchem das vorübergehende Identitätswort zugewiesen wird,
- jedes vorübergehende Identitätswort in das durch das erste Feld (IND) bezeichnete n-Uplet einzuschreiben,
- das n-Uplet freizugeben, wenn der mobile Teilnehmer seine Anwesenheit in einer Zone zum Ausdruck bringt, die einer anderen Registriereinheit entspricht,
- ein neues vorübergehendes Identitätswort (TMSI) einem Teilnehmer zuzuweisen, wenn dieser Teilnehmer nach einer Inaktivität einer Dauer, die größer als ein Schwellenwert (K) ist, von neuem seine Anwesenheit in einer von der Registriereinheit bedienten Zone anzeigt, wobei das erste Feld (IND) unverändert bleibt und das zweite Feld (IPA) von dem Zeitpunkt abhängig ist, in welchem der Teilnehmer von neuem seine Anwesenheit anzeigt,
- das neue vorübergehende Identitätsworts in das durch das erste Feld (IND) bezeichnete n-Uplet einzuschreiben,
- innerhalb der Datenbasis derjenigen n-Uplets periodisch freizugeben, die vorübergehenden Identitätswörtern entsprechen, deren zweite Felder (IPA) Zeitpunkten (P₀ + C₁ bis P₀ + C₀) entsprechen, die zeitlich früher als ein erster Schwellenzeitpunkt liegen,
- in der Datenbasis diejenigen n-Uplets freizugeben, die vorübergehenden Identitätswörtern entsprechen, deren zweite Felder (IPA) Zeitpunkten (P₀ + C₂ bis P₀ + C₀) entsprechen, die zeitlich jünger als ein zweiter Schwellenzeitpunkt sind, der jünger als der erste ist, wenn sich der Füllstand der Datenbasis der Sättigung nähert.

2. Verfahren nach Anspruch 1, dadurch gekennzeichnet, daß es zum Zuweisen eines Worts der vorübergehenden Identität (TMSI), das ein zweites Feld (IPA) enthält, welches vom Zeitpunkt abhängt, in welchem das vorübergehende Identitätswort zugeteilt wird, darin besteht, als zweites Feld (IPA) das Ergebnis P₀ der Zählung der Zeitperioden Modulo einer festen Zahl zu nehmen und für die Dauer des Zählzyklus zwischen zwei Nulldurchgängen dieses Ergebnisses einen Wert zu nehmen, der größer als die wahrscheinliche maximale Dauer der Inaktivität eines Teilnehmers ist.

3. Verfahren nach Anspruch 2, dadurch gekennzeichnet, daß das Verfahren zum Zuweisen eines Worts der vorübergehenden Identität (TMSI), das ein zweites Feld (IPA) aufweist, welches vom Zeitpunkt abhängt, in welchem das vorübergehende Identitätswort zugeteilt wird, weiter darin besteht, das Ergebnis der Zählung aufzubewahren und um eine Einheit jedesmal dann zu inkrementieren, wenn die Registriereinheit für die Besucherortung von einem Zwischenfall betroffen wird, der eine partielle oder totale Löschung des Speichers verursacht.

4. Verfahren nach Anspruch 1, dadurch gekennzeichnet, daß es zum Zuweisen eines vorübergehenden Identitätsworts, das ein zweites Feld aufweist, welches vom Zeitpunkt abhängt, in welchem das vorübergehende Identitätswort zugewiesen wird, darin besteht, als zweites Feld:
- ein erstes Binärwort (IPA′) zu nehmen, dessen Wert das Ergebnis der Zählung der Zeitperioden Modulo einer festen Zahl ist, wobei die Dauer des Zählzyklus zwischen zwei Nulldurchgängen dieses Ergebnisses größer als die wahrscheinliche maximale Dauer einer Inaktivität eines Teilnehmers ist,
- ein zweites Binärwort (IR) zu nehmen, dessen Wert um eine Einheit jedesmal dann inkrementiert wird, wenn die Registriereinheit für die Besucherortung von einem Zwischenfall betroffen wird, der eine partielle oder totale Löschung des Speichers verursacht.

5. Verfahren nach einem der Ansprüche 2 oder 4, dadurch gekennzeichnet, daß es weiter darin besteht, Zeitperioden zu nehmen, die allgemein eine feste Dauer haben.

6. Verfahren nach einem der Ansprüche 2 oder 4, dadurch gekennzeichnet, daß es darin besteht, als Zeitperioden Zeitintervalle zu nehmen, derart, daß es in jedem Zeitintervall eine gleiche maximale, vorbestimmte Anzahl von vorübergehenden Identitäten gibt, die mobilen Teilnehmern erteilt sind, welche ihre Anwesenheit anzeigen.

## Claims

1. In a cellular radiotelephone system, a method of protecting the data base of a visitor location register from saturation, the method consisting in:
allocating a temporary mobile identity (TMSI) word to each mobile that announces its presence for the first time in a geographical zone served by the register, said word comprising a first field (IND) specifying an internal reference for an n-tuplet in a table of the data base, and a second field (IPA) which is a function of the instant at which the temporary identity word is allocated;
writing each temporary identity word in the n-tuplet designated by its first field (IND);
releasing said n-tuplet when the mobile demonstrates its presence in a zone corresponding to another register;
allocating a new temporary identity word (TMSI) to a mobile each time said mobile again announces its presence in a zone served by the register after a silence of duration greater than a threshold value (K), with the first field (IND) thereof remaining unchanged while the second field (IPA) thereof being a function of the instant at which the mobile again announces its presence;
writing the new temporary identity word in the n-tuplet designated by the first field (IND);
periodically releasing from the data base those n-tuplets which correspond to temporary identity words whose second fields (IPA) correspond to instants (P₀ + C₁ to P₀ + C₀) earlier than a first threshold instant; and
releasing n-tuplets from the data base corresponding to temporary identity words whose second fields (IPA) correspond to instants (P₀ + C₂ to P₀ + C₀) earlier than a second threshold instant which is more recent than the first threshold instant, whenever the data base is filled close to saturation.

2. A method according to claim 1, characterized in that in order to allocate a temporary identity word (TMSI) including a second field (IPA) which is a function of the instant at which the temporary identity word is allocated, the method consists in giving the second field (IPA) the result P₀ of counting time periods modulo a fixed number; and in taking a counting cycle for which the duration between two successive passes through zero of said result exceeds the maximum probable duration of silence from a mobile.

3. A method according to claim 2, characterized in that in order to allocate a temporary identity word (TMSI) including a second field (IPA) which is a function of the instant at which the temporary identity word is allocated, the method further consists in saving the result of the count and in incrementing it by unity each time the visitor location register suffers an accident causing its memory to be erased fully or in part.

4. A method according to claim 1, characterized in that in order to allocate a temporary identity word including a second field which is a function of the instant at which the temporary identity is allocated, the method consists in making up the second field from:
a first binary word (IPA′) whose value is the result of counting time periods modulo a fixed number, with the duration of the counting cycle between two successive passes through zero of said result being selected to be greater than the maximum possible duration of silence from a mobile; and
a second binary word (IR) whose value is incremented by unity each time the visitor location register suffers an accident causing its memory to be erased totally or in part.

5. A method according to claim 2 or 4, characterized in that it further consists in taking time periods that are generally of fixed duration.

6. A method according to claim 2 or 4, characterized, in that it consists in taking time periods constituted by time intervals such that within each time interval there is a predetermined maximum number of temporary identities allocated to mobiles announcing their presence.
